# FASCICULE DE BREVET EUROPEEN

(11) **EP 3 243 043 B1**
(45) Date de publication et mention de la délivrance du brevet: **06.02.2019**
(21) Numéro de dépôt: 15820220.0
(22) Date de dépôt: 07.12.2015
(51) Int. Cl.: G01D 5/34, G01D 5/26, F02M 65/00, F16K 37/00

(54) **PROCEDE ET DISPOSITIF DE DETECTION DE PRESENCE D'UN RESSORT SUR UN JOINT EN QUEUE D'UNE SOUPAPE PAR FIBRES OPTIQUES**
VERFAHREN UND VORRICHTUNG ZUR DETEKTION DES VORHANDENSEINS EINER FEDER EINES ENTLASTUNGSVENTILSCHAFTS DURCH OPTISCHE FASERN
METHOD AND DEVICE FOR DETECTING THE PRESENCE OF A SPRING ON A SEAL OF A RELIEF VALVE STEM BY OPTICAL FIBRES

(30) Priorité: 05.01.2015 FR 1550017
(43) Date de publication de la demande: 15.11.2017
(73) Titulaire: PSA Automobiles SA, 78300 Poissy (FR)
(72) Inventeur: SONET, Alain, 60560 Orry la Ville (FR); DIBOINE, Christian, 78340 Les Clayes sous Bois (FR)
(74) Mandataire: Bourguignon, Eric Pascal Jean
(86) Numéro de dépôt international: PCT/FR2015/053357
(87) Numéro de publication internationale: WO 2016/110618

(56) Documents cités:
- DE-A1- 3 515 476
- DE-A1- 4 105 270
- JP-A- S58 206 872
- US-A1- 2012 325 935

## Description

L'invention porte sur un procédé et un dispositif de détection de présence d'un ressort sur un joint en queue d'une soupape, ce procédé se faisant par détection par fibres optiques.

Il est connu pour la détection d'un ressort sur un joint en queue d'une soupape d'utiliser un système de contrôle mécanique et électrique et/ou, en complément ou alternativement, un système de contrôle par vision. Le but de tels systèmes est de contrôler la présence ou l'absence du ressort sur le joint en queue de soupape de manière systématique.

Cependant, pour les systèmes mécaniques actuels, ceux-ci peuvent ne pas détecter les ressorts sur les joints. Pour les systèmes de vision, ceux-ci sont complexes à démarrer, à fiabiliser et à maintenir. Ces systèmes présentent des coûts d'investissement élevés.

Le brevet KR-B-100951983 décrit une détection d'un ressort de joint de queue de soupape par un équipement qui détecte une fuite d'air ou non du fait de la présence ou de l'absence du ressort, ce qui déplace une bille pour réaliser la fuite d'air. Ce mode de détection manque cependant gravement de fiabilité. Le document US2012/325935 décrit une méthode pour détecter la position de l'aiguille d'un dispositif d'injection de carburant. Le détecteur comprend un capteur de force piézoélectrique connecté au ressort de l'actionneur de soupape. Le document DE 41 05 270 décrit un procédé optique et un dispositif de mesure de déplacement ou de déformation dans lequel un faisceau lumineux est émis par un émetteur ayant une puissance lumineuse constante dans le temps. Le document JP 58206872 décrit également une méthode de détection du temps d'injection d'un injecteur de carburant qui a recourt à une fibre optique, tout comme le document DE 35 15 476.

Par conséquent, le problème à la base de l'invention est de vérifier la présence d'un ressort en joint de queue de soupape d'une manière simple mais efficace.

Pour atteindre cet objectif, il est prévu selon l'invention un procédé de détection de présence d'un ressort sur un joint en queue d'une soupape dit joint queue de soupape, le procédé comprenant les étapes suivantes:
- emmanchement du joint queue de soupape dans un dispositif de détection avec réception et centrage du joint de soupape à l'intérieur du dispositif,
- détection de l'absence ou de la présence du ressort sur le joint de soupape par l'émission d'un faisceau lumineux entre une fibre optique émettrice et une fibre optique réceptrice, les fibres optiques étant disposées sur un côté respectif de la queue de la soupape en opposition par rapport au ressort, le ressort quand présent étant sur le passage du faisceau lumineux émis entre les fibres optiques.

L'effet technique est d'obtenir un contrôle simple et efficace de la présence d'un ressort en queue de soupape. Un tel dispositif permet de contrôler la présence du ressort sur le joint, la mise en place correcte dans la culasse de la queue de soupape et de détecter l'absence du ressort même si le joint est présent, ce qui est un avantage par rapport aux systèmes de contrôle selon l'état de la technique.

L'invention concerne aussi un dispositif de détection de présence d'un ressort sur un joint en queue d'une soupape pour la mise en oeuvre du procédé précédemment décrit, lequel dispositif comprend un embout creux recevant la queue de soupape munie de son joint, un élément de centrage interne au dispositif pour la réception et le centrage de la queue de soupape munie de son joint dans l'embout creux et un ensemble d'émission et de réception d'un faisceau lumineux comprenant une fibre optique émettrice et une fibre optique réceptrice.

Avantageusement, les fibres optiques s'étendent à l'intérieur du dispositif dans sa longueur.

Avantageusement, les fibres optiques sont maintenues dans des moyens de maintien amovible avec possibilité de réglage en longueur des fibres dans le dispositif.

Avantageusement, les fibres optiques sont supportées sur au moins une partie de leur longueur par un support respectif faisant partie des moyens de maintien amovible.

Avantageusement, les supports respectifs des fibres optiques sont reliés entre eux par un corps faisant partie des moyens de maintien amovible.

Avantageusement, le corps faisant partie des moyens de maintien amovible est fixé de manière amovible sur l'élément de centrage.

Avantageusement, l'élément de centrage comprend, d'une part, un plot de centrage à son extrémité tournée vers la queue de soupape, le plot de centrage pénétrant dans la queue de soupape et, d'autre part, un méplat sur lequel repose le corps des moyens de maintien amovible en position fixée des moyens de maintien amovible sur l'élément de centrage.

Avantageusement, les moyens de maintien amovible comprennent une bride de serrage amovible pour chaque fibre optique, chaque bride de serrage intercalant une fibre optique entre elle et son support respectif.

Avantageusement, les brides de serrage sont fixées de manière amovible sur leur support respectif ou sur le corps formé par les supports respectifs.

D'autres caractéristiques, buts et avantages de la présente invention apparaîtront à la lecture de la description détaillée qui va suivre et au regard des dessins annexés donnés à titre d'exemples non limitatifs et sur lesquels :
- la figure 1 est une représentation schématique d'une coupe longitudinale d'un mode de réalisation d'un dispositif de détection de présence d'un ressort sur un joint en queue d'une soupape selon la présente invention,
- la figure 2 est une représentation schématique d'une vue en perspective d'un embout creux recevant la queue de soupape munie de son joint, cet embout creux faisant partie d'un dispositif de détection de présence d'un ressort sur un joint en queue d'une soupape selon la présente invention,
- la figure 3 est une représentation schématique d'une vue en perspective d'un élément de centrage pour la queue de soupape munie de son joint, cet élément de centrage faisant partie d'un dispositif de détection de présence d'un ressort sur un joint en queue d'une soupape selon la présente invention,
- la figure 4 est une représentation schématique d'une vue en perspective d'une partie des moyens de maintien amovible des fibres optiques équipant un dispositif de détection de présence d'un ressort sur un joint en queue d'une soupape selon la présente invention,
- la figure 5 est une représentation schématique d'une vue en perspective du reste des moyens de maintien amovible des fibres optiques sous forme d'une des deux brides de serrage équipant un dispositif de détection de présence d'un ressort sur un joint en queue d'une soupape selon la présente invention.

Il est à garder à l'esprit que les figures sont données à titre d'exemples et ne sont pas limitatives de l'invention. Elles constituent des représentations schématiques de principe destinées à faciliter la compréhension de l'invention et ne sont pas nécessairement à l'échelle des applications pratiques. En particulier les dimensions des différents éléments illustrés ne sont pas représentatives de la réalité.

En se référant aux figures, la présente invention concerne tout d'abord un procédé de détection de contrôle de présence d'un ressort 3 sur un joint en queue 1a d'une soupape 1.

Selon la présente invention, le procédé comprend l'étape d'emmanchement de la queue 1a de soupape dans un dispositif de détection 2 avec réception et centrage du joint de soupape à l'intérieur du dispositif 2. Les moyens de réception 5 et de centrage 6 seront plus précisément décrits ultérieurement. Le joint sera dénommé ci-après joint queue de soupape.

Le joint queue 1a de soupape 1 est alors fermement positionné dans les moyens de réception 5, l'extrémité de ces moyens de maintien recevant la coupole 1b du joint queue 1a de soupape 1 contre elle.

Cette étape est suivie par l'étape de détection de l'absence ou de la présence du ressort 3 sur le joint de soupape par l'émission d'un faisceau lumineux 7 entre une fibre optique émettrice 4 et une fibre optique réceptrice 4a, les fibres optiques 4, 4a étant disposées sur un côté respectif du joint queue 1a de soupape en opposition par rapport au ressort 3, le ressort 3, quand présent, étant sur le passage du faisceau lumineux 7 émis entre les fibres optiques 4, 4a. L'absence ou la présence du ressort 3 est alors détectée par le passage ou non du faisceau lumineux 7.

Un tel procédé selon l'invention permet de vérifier la présence des ressorts sur les joints queue de soupape, par exemple, lors du chargement manuel dans les têtes d'emmanchement. Les têtes sont équipées d'embouts développés dans cette invention avec des détections par fibres et dont l'alignement et le positionnement est très délicat, le ressort, le plus fréquemment torique, étant de faible dimension.

L'invention concerne aussi un dispositif de détection 2 de présence d'un ressort 3 sur un joint en queue 1a d'une soupape pour la mise en oeuvre du procédé précédemment décrit.

Le dispositif 2 comprend un embout creux 5 recevant la queue 1a de soupape munie de son joint, un élément de centrage 6 interne au dispositif 2 pour le maintien et le centrage du joint queue 1a de soupape dans l'embout creux 5, ces deux éléments représentant les moyens de réception et de centrage précédemment mentionnés.

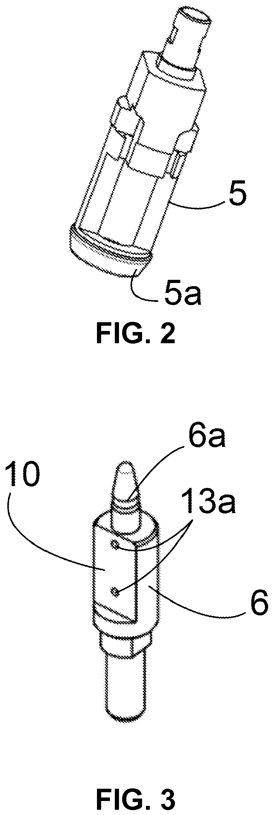

L'embout 5 est montré isolé à la figure 2 tandis que l'élément de centrage 6 montré aussi isolé peut être particulièrement bien vu à la figure 3.

Le dispositif 2 comprend aussi un ensemble d'émission 4, 4a et de réception d'un faisceau lumineux 7 comprenant une fibre optique émettrice 4 et une fibre optique réceptrice 4a.

Le générateur de lumière peut être placé dans le dispositif 2, avantageusement plus profondément à l'intérieur du dispositif 2 que l'ouverture 5a de l'embout 5 par laquelle la queue 1a de soupape est introduite.

Dans cette configuration, une collerette 1b faisant le tour de la queue 1a de soupape repose en butant contre le contour extérieur de cette ouverture 5a.

L'embout creux 5 est avantageusement cylindrique et fixé de manière amovible sur une tête d'emmanchement qui permet l'emmanchement d'un joint sur une queue de soupape.

Le centrage et la réception du joint queue de soupape 1a lors de l'emmanchement peuvent se faire par un pilote central.

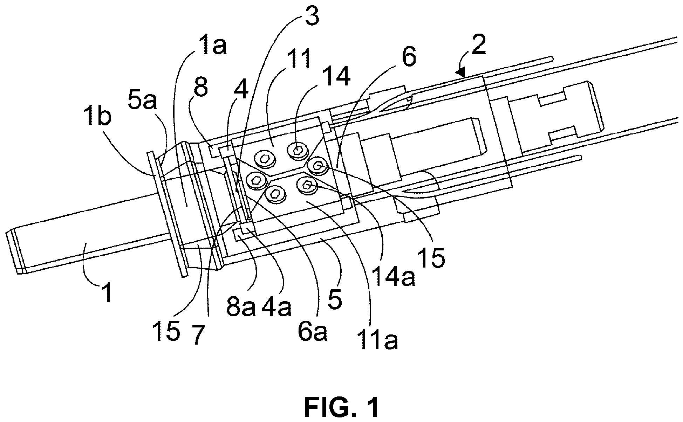

Comme il peut être vu à la figure 1, les fibres optiques 4, 4a s'étendent à l'intérieur du dispositif 2 dans sa longueur. Les fibres optiques 4, 4a sont maintenues dans l'embout 5 par des moyens de maintien amovible 8, 8a, 9, 11, 11a avec possibilité de réglage en longueur des fibres 4, 4a dans le dispositif 2.

Les fibres 4, 4a sont donc positionnées et alignées par les moyens de maintien amovible 8, 8a, 9, 11, 11a fixés à l'intérieur de l'embout creux 5 cylindrique en étant avantageusement regroupés dans une platine.

Une des difficultés rencontrées avec l'usage de fibres optiques dans un tel dispositif est leur maintien, les supports classiques de telles fibres optiques ne correspondant pas forcément à leur application souhaitée. Il est nécessaire d'obtenir un positionnement et une localisation précis par rapport au ressort dont on doit contrôler la présence ou l'absence.

Dans un mode de réalisation de l'invention, les fibres optiques 4, 4a sont supportées sur au moins une partie de leur longueur par un support 8, 8a respectif faisant partie des moyens de maintien amovible 8, 8a, 9, 11, 11a. Les supports 8, 8a sont avantageusement de section rectangulaire et de forme allongée et plate.

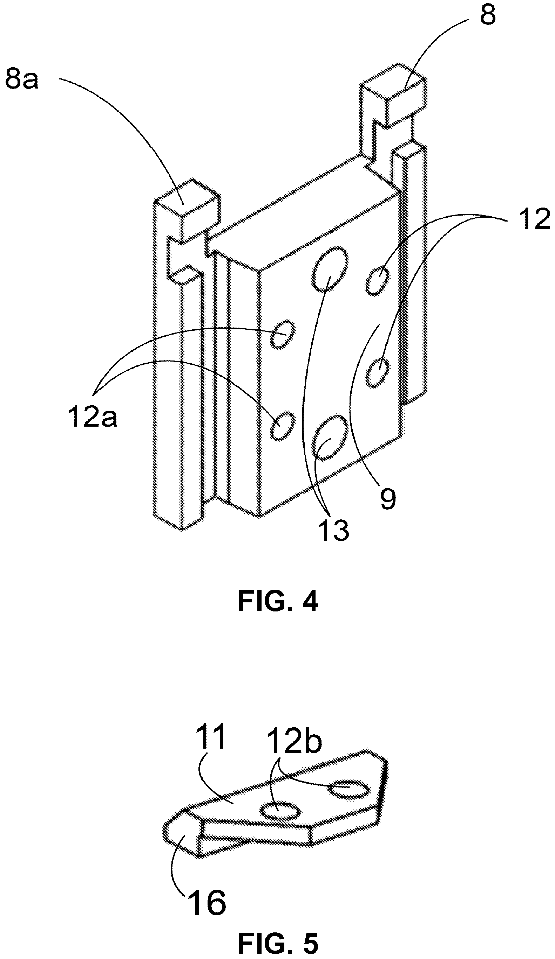

Comme il peut être vu plus particulièrement aux figures 1 et 4, les supports 8, 8a respectifs des fibres optiques 4, 4a peuvent être reliés entre eux par un corps 9 intercalé entre les deux supports 8, 8a.

Le corps 9 présente une face plane qui est destinée à recevoir des brides de serrage 11, 11a des fibres optiques 4, 4a, brides de serrage 11, 11a qui seront décrites ultérieurement en regard de la figure 5. Le corps 9 et les supports peuvent former les parties d'une platine comme précédemment mentionné.

Le corps 9 des moyens de maintien amovible 8, 8a, 9, 11, 11a peut être fixé de manière amovible sur l'élément de centrage 6. Par exemple, le corps 9 comprend des évidements 13 pour des moyens de fixation amovible, de préférence deux évidements montrés à la figure 4.

Ces évidements 13 correspondent à des évidements 13a portés par l'élément de centrage 6 comme il peut être vu à la figure 3.

Les évidements 13 et 13a sont traversés par des moyens de fixation 15 amovibles visibles à la figure 1, avantageusement sous forme de vis au moins les évidements 13a de l'élément de centrage 6 étant filetés.

Comme il peut être vu plus particulièrement à la figure 3 en se référant aussi à la figure 1, l'élément de centrage 6 peut comprendre un plot de centrage 6a à son extrémité tournée vers le joint queue de soupape 1a, le plot de centrage 6a pénétrant dans la queue de soupape 1a. Ceci permet de centrer de manière précise le joint queue 1a de soupape par rapport au dispositif de détection 2.

De plus, en se référant à toutes les figures, l'élément de centrage 6 peut comprendre un méplat 10 sur lequel repose le corps 9 des moyens de maintien amovible 8, 8a, 9, 11, 11a en position fixée des moyens de maintien amovible 8, 8a, 9, 11, 11a sur l'élément de centrage 6, la solidarisation étant effectuée par les moyens de fixation 15 traversant les évidements 13 du corps 9 puis pénétrant dans les évidements 13a de l'élément de centrage 6 pratiqués sur le méplat 10.

En se référant plus particulièrement aux figures 1 à 4, les moyens de maintien amovible 8, 8a, 9, 11, 11a peuvent comprendre une bride de serrage amovible 11, 11a pour chaque fibre optique 8, 8a. Chaque bride de serrage 11, 11a peut alors intercaler une fibre optique 4, 4a entre elle et son support 8, 8a respectif.

Dans le mode de réalisation montré à la figure 4 tout en se référant aux autres figures, le corps 9 des moyens de maintien amovible intercalé entre les deux fibres 4, 4a comprend des évidements 12a pour une bride de serrage 11, 11a respective et associée soit à une fibre optique émettrice 4 ou à une fibre optique réceptrice 4a.

Les brides de serrage 11, 11a peuvent être fixées de manière amovible sur leur support 8, 8a respectif ou sur le corps 9 reliant les supports 8, 8a respectifs, ce dernier mode étant celui décrit dans les figures.

Comme il peut être vu notamment à la figure 1, des moyens de fixation 14, 14a, avantageusement deux moyens de fixation 14, 14a par bride de serrage 11, 11a sont introduits par les évidements 12a pour la solidarisation des brides de serrage 11, 11a dans le corps 9.

A la figure 5, tout en se référant aux autres figures, il est montré un mode de réalisation d'une bride de serrage 11 qui peut aussi bien être une bride de serrage pour une fibre optique émettrice ou une fibre optique réceptrice, leur forme étant cependant chirale comme celle d'un objet et son image dans un miroir.

Cette forme de réalisation d'une bride de serrage 11 comprend une première face portant des évidements 12b de passage des moyens de fixation 14, correspondant aux évidements 12a du corps 9 visible à la figure 4.

La première face est à la figure 5 trapézoïdale avec la grande base disposée la plus externe au corps, la petite base étant la plus interne. De plus, la bride de serrage 11 comprend comme seconde face un rebord externe 16, sensiblement perpendiculaire à la première face, cette seconde face 16 entourant l'épaisseur du corps 9.

Il est possible de prévoir une protection destinée à envelopper au moins partiellement une portion de la longueur d'une fibre optique. Cette protection peut présenter une forme cylindrique avec une interruption dans sa longueur pour une insertion facilitée autour de la fibre optique.

Il est à noter que le procédé de détection selon la présente invention peut être élargi à d'autres éléments présents en queue de soupape tels que le joint ou, de manière plus large, sur d'autres pièces présentant à une extrémité un élément dont la présence est à vérifier. La pièce de réception sous la forme d'un embout creux et l'élément de centrage sont seulement à adapter au type de pièce contrôlée.

La mise en oeuvre d'un tel procédé de détection permet de limiter des casses du moteur en utilisation suite à l'absence du ressort. Elle permet également de contrôler plus d'éléments qu'un simple système mécanique. Le dispositif selon l'invention est simple d'utilisation et peut fonctionner automatiquement ou manuellement.

Les principaux avantages de l'invention sont une simplicité de conception et d'installation, un entretien réduit, une reproductibilité des mesures une fois que les fibres ont été positionnées de manière adéquate, un encombrement réduit et un coût réduit.

En ce qui concerne le coût réduit, la solution selon la présente invention représente un gain financier important en étant nettement moins chère que l'intégration d'un système de vision qui coûte environ 180.000 €. Le prix de sa maintenance est peu élevé d'où un gain important en investissement.

## Revendications

1. Procédé de détection de présence d'un ressort (3) sur un joint en queue (1a) d'une soupape (1) dit joint queue (1a) de soupape, le procédé comprenant les étapes suivantes:
- emmanchement du joint queue (1a) de soupape dans un dispositif de détection (2) avec réception et centrage du joint de soupape à l'intérieur du dispositif (2),
- détection de l'absence ou de la présence du ressort (3) sur le joint de soupape par l'émission d'un faisceau lumineux (7) entre une fibre optique émettrice (4) et une fibre optique réceptrice (4a), les fibres optiques (4, 4a) étant disposées sur un côté respectif du joint queue (1a) de la soupape en opposition par rapport au ressort (3), le ressort (3), quand présent, étant sur le passage du faisceau lumineux (7) émis entre les fibres optiques (4, 4a).

2. Dispositif de détection (2) de présence d'un ressort (3) sur un joint en queue (1a) d'une soupape pour la mise en oeuvre d'un procédé selon la revendication 1, lequel dispositif (2) comprend un embout creux (5) recevant le joint queue (1a) de soupape, un élément de centrage (6) interne au dispositif (2) pour la réception et le centrage de la queue (1a) de soupape munie de son joint dans l'embout creux (5) et un ensemble d'émission (4, 4a) et de réception d'un faisceau lumineux (7) comprenant une fibre optique émettrice (4) et une fibre optique réceptrice (4a).

3. Dispositif (2) selon la revendication 2, dans lequel les fibres optiques (4, 4a) s'étendent à l'intérieur du dispositif (2) dans sa longueur.

4. Dispositif (2) selon la revendication 3, dans lequel les fibres optiques (4, 4a) sont maintenues dans des moyens de maintien amovible (8, 8a, 9, 11, 11a) avec possibilité de réglage en longueur des fibres (4, 4a) dans le dispositif (2).

5. Dispositif (2) selon la revendication 4, dans lequel les fibres optiques (4, 4a) sont supportées sur au moins une partie de leur longueur par un support (8, 8a) respectif faisant partie des moyens de maintien amovible (8, 8a, 9, 11, 11a).

6. Dispositif (2) selon la revendication 5, dans lequel les supports (8, 8a) respectifs des fibres optiques (4, 4a) sont reliés entre eux par un corps (9) faisant partie des moyens de maintien amovible (8, 8a, 9, 11, 11a).

7. Dispositif (2) selon la revendication 6, dans lequel le corps (9) faisant partie des moyens de maintien amovible (8, 8a, 9, 11, 11a) est fixé de manière amovible sur l'élément de centrage (6).

8. Dispositif (2) selon la revendication 7, dans lequel l'élément de centrage (6) comprend, d'une part, un plot de centrage (6a) à son extrémité tournée vers la queue (1a) de soupape, le plot de centrage (6a) pénétrant dans le joint queue (1a) de soupape et, d'autre part, un méplat (10) sur lequel repose le corps (9) faisant partie des moyens de maintien amovible (8, 8a, 9, 11, 11a) en position fixée des moyens de maintien amovible (8, 8a, 9, 11, 11a) sur l'élément de centrage (6).

9. Dispositif (2) selon l'une quelconque des revendications 5 à 8, dans lequel les moyens de maintien amovible (8, 8a, 9, 11, 11a) comprennent une bride de serrage (11, 11a) amovible pour chaque fibre optique (8, 8a), chaque bride de serrage (11, 11a) intercalant une fibre optique (4, 4a) entre elle et son support (8, 8a) respectif.

10. Dispositif (2) selon la revendication 9, dans lequel les brides de serrage (11, 11a) sont fixées de manière amovible sur leur support (8, 8a) respectif ou sur le corps (9) reliant les supports (8, 8a) respectifs.

## Patentansprüche

1. Verfahren zur Detektion des Vorhandenseins einer Feder (3) auf einer Schaftdichtung (1a) eines Ventils (1), Ventilschaftdichtung (1a) genannt, wobei das Verfahren die folgenden Schritte aufweist:
- Aufschrumpfen der Ventilschaftdichtung (1a) in einer Detektionsvorrichtung (2) mit Aufnahme und Zentrierung der Ventildichtung im Inneren der Vorrichtung (2),
- Detektion des Abwesenheit oder des Vorhandenseins der Feder (3) auf der Ventildichtung durch Abgeben eines Lichtstrahls (7) zwischen einer sendenden Lichtleitfaser (4) und einer empfangenden Lichtleitfaser (4a), wobei die Lichtleitfasern (4, 4a) auf einer jeweiligen Seite der Schaftdichtung (1a) des Ventils in Gegenüberlage bezüglich der Feder (3) angeordnet sind, wobei die Feder (3), wenn sie vorhanden ist, auf der Passage des Lichtstrahls (7), der zwischen den Lichtleitfasern (4, 4a) abgegeben wird, liegt.

2. Detektionsvorrichtung (2) des Vorhandenseins einer Feder (3) auf einer Schaftdichtung (1a) eines Ventils zum Umsetzen eines Verfahrens nach Anspruch 1, wobei die Vorrichtung (2) einen hohlen Ansatz (5) umfasst, der die Ventilschaftdichtung (1a) aufnimmt, ein Zentrierungselement (6) innerhalb der Vorrichtung (2) für das Aufnehmen und das Zentrieren des Ventilschafts (1a), der mit seiner Dichtung versehen ist, in dem hohlen Ansatz (5), und eine Sende- und Empfangseinheit (4, 4a) eines Lichtstrahls (7), die eine sendende Lichtleitfaser (4) und eine empfangende Lichtleitfaser (4a) umfasst.

3. Vorrichtung (2) nach Anspruch 2, wobei sich die Lichtleitfasern (4, 4a) in dem Inneren der Vorrichtung (2) in ihrer Länge erstrecken.

4. Vorrichtung (2) nach Anspruch 3, wobei die Lichtleitfasern (4, 4a) in abnehmbaren Haltemitteln (8, 8a, 9, 11, 11a) mit Längeneinstellmöglichkeit der Fasern (4, 4a) in der Vorrichtung (2) gehalten sind.

5. Vorrichtung (2) nach Anspruch 4, wobei die Lichtleitfasern (4, 4a) auf mindestens einem Teil ihrer Länge von einem Träger jeweiligen (8, 8a), der zu den abnehmbaren Haltemitteln (8, 8a, 9, 11, 11a) gehört, getragen werden.

6. Vorrichtung (2) nach Anspruch 5, wobei die jeweiligen Träger (8, 8a) der Lichtleitfasern (4, 4a) miteinander durch einen Körper (9) verbunden sind, der zu den abnehmbaren Haltemitteln (8, 8a, 9, 11, 11a) gehört.

7. Vorrichtung (2) nach Anspruch 6, wobei der Körper (9), der zu den abnehmbaren Haltemitteln (8, 8a, 9, 11, 11a) gehört, abnehmbar auf dem Zentrierungselement (6) befestigt ist.

8. Vorrichtung (2) nach Anspruch 7, wobei das Zentrierungselement (6) einerseits einen Zentrierungsstift (6a) an seinem Ende, das zu dem Ventilschaft (1a) zeigt, umfasst, wobei der Zentrierstift (6a) in die Ventilschaftdichtung (1a) eindringt, und, andererseits, ein Flachstück (10), auf dem der Körper (9), der zu den abnehmbaren Haltemitteln (8, 8a, 9, 11, 11a) gehört, in befestigter Position der abnehmbaren Haltemittel (8, 8a, 9, 11, 11a) auf dem Zentrierungselement (6) ruht.

9. Vorrichtung (2) nach einem der Ansprüche 5 bis 8, wobei die abnehmbaren Haltemittel (8, 8a, 9, 11, 11a) einen abnehmbaren Spannflansch (11, 11a) für jede Lichtleitfaser (8, 8a) umfassen, wobei jeder Spannflansch (11, 11a) eine Lichtleitfaser (4, 4a) zwischen sich und ihrem jeweiligen Träger (8, 8a) einfügt.

10. Vorrichtung (2) nach Anspruch 9, wobei die Spannflansche (11, 11a) abnehmbar auf ihrem jeweiligen Träger (8, 8a) oder auf dem Körper (9), der die jeweiligen Träger (8, 8a) verbindet, befestigt sind.

## Claims

1. A method for detecting the presence of a spring (3) on a seal on the stem (1a) of a relief valve (1), designated relief valve stem seal (1a), the method including the following steps:
- fitting the relief valve stem seal (1a) in a detection device (2) with reception and centring of the relieve valve seal in the interior of the device (2),
- detection of the absence or presence of the spring (3) on the relief valve seal by the emission of a light beam (7) between an emitting optical fibre (4) and a receiving optical fibre (4a), the optical fibres (4a, 4a) being arranged on a respective side of the stem seal (1a) of the relief valve in opposition with respect to the spring (3), the spring (3), when present, being on the passage of the light beam (7) emitted between the optical fibres (4, 4a).

2. A device (2) for detecting the presence of a spring (3) on a stem seal (1a) of a relief valve for the implementation of a method according to claim 1, which device (2) includes a hollow end-piece (5) receiving the relief valve stem seal (1a), a centring element (6) internal to the device (2) for the reception and centring of the relief valve stem (1a) provided with its seal in the hollow end-piece (5), and a assembly for emission (4, 4a) and reception of a light beam (7) including an emitting optical fibre (4) and a receiving optical fibre (4a).

3. The device (2) according to claim 2, in which the optical fibres (4, 4a) extend in the interior of the device (2) in its length.

4. The device (2) according to claim 3, in which the optical fibres (4, 4a) are held in removable holding means (8, 8a, 11, 11a) with the possibility of regulating in length of the fibres (4, 4a) in the device (2).

5. The device (2) according to claim 4, in which the optical fibres (4, 4a) are supported over at least a portion of their length by a respective support (8, 8a) forming part of the removable holding means (8, 8a, 9, 11, 11a).

6. The device (2) according to claim 5, in which the respective supports (8, 8a) of the optical fibres (4, 4a) are connected with one another by a body (9) forming part of the removable holding means (8, 8a, 11, 11a).

7. The device (2) according to claim 6, in which the body (9) forming part of the removable holding means (8, 8a, 9, 11, 11a) is fixed in a removable manner on the centring element (6).

8. The device (2) according to claim 7, in which the centring element (6) includes, on the one hand, a centring pin (6a) at its end turned towards the relief valve stem (1a), the centring pin (6a) penetrating into the stem seal (1a) of the relief valve and, on the other hand, a flat area (10) on which on which the body (9) rests forming part of the removable holding means (8, 8a, 9, 11, 11a) in fixed position of the removable holding means (8, 8a, 9, 11, 11a) on the centring element (6).

9. The device (2) according to any one of claims 5 to 8, in which the removable holding means (8, 8a, 9, 11, 11a) include a removable clamping flange (11, 11a) for each optical fibre (8, 8a), each clamping flange (11, 11a) intercalating an optical fibre (4, 4a) between it and its respective support (8, 8a).

10. The device (2) according to claim 9, in which the clamping flanges (11, 11a) are fixed in a removable manner on their respective support (8, 8a) or on the body (9) connecting the respective supports (8, 8a).
